# EUROPEAN PATENT APPLICATION

(11) **EP 4 589 259 A1**
(43) Date of publication of application: **23.07.2025**
(21) Application number: 24152426.3
(22) Date of filing: 17.01.2024
(51) Int. Cl.: G01D 3/036

(54) **COMPUTER-IMPLEMENTED METHOD AND SYSTEM FOR IMPROVING THE SIGNAL QUALITY OF SENSOR DATA**

(71) Applicant: Siemens Aktiengesellschaft, 80333 München (DE)
(72) Inventor: Ardic Serpen, Burcu, 34752 Istanbul (TR); Ayvazoglu Celikkol, Ezgi, 34736 KADIKOY (TR); Gonul, Mustafa, 34406 Kagithane (TR); Muslu Tastan, Gizem, 34854 istanbul (TR); Ulusoy, Asiye, 34846 Istanbul (TR)
(74) Representative: Siemens Patent Attorneys

(57) **Abstract**

Computer-implemented method for improving the signal quality of a first sensor data (SD1), wherein the first sensor data (SD1) is captured by a first sensing means (SM1), which is environmentally coupled to a first technical device (D1), and at least one second sensor data (SD2-SD5) is captured by at least one second sensing means (SM2-SM5), wherein the at least one second sensing means (SM2-SM5) is environmentally decoupled from the first technical device (D1), and a correlation function is calculated by a processor (CPU) with a memory, which is connected with the first and the at least one second sensing means (SM1-SMS), using the first and the at least one second sensor data (SD1-SDS) to estimate the background noise (BN), to which background noise (BN) the first and the at least one second sensing means (SM1-SMS) are exposed simultaneously, and the correlation function is used to reduce the background noise (BN) of the first sensor data (SD1).

## Description

The invention related to a computer-implemented method for improving the signal quality of a first sensor data, wherein the first sensor data is captured by a first sensing means, which is environmentally coupled to a first technical device, and at least one second sensor data is captured by at least one second sensing means.

Several devices like low-voltage motors are used in industrial environment for instance at a production line, in drives for manufacturing machines or transportation devices or transportation vehicles.

Low-voltage motors are electromechanical machines which do not expose any information about their operation.

Therefore, external sensors often need to be mounted for tracking the motor condition, like the sensor Siemens SIMOTICS CONNECT 400 (SC400) and SIDRIVE IQ Fleet for low-voltage motor diagnostics.

The measurements of such sensors, like the SC400, which are built for low voltage applications, are often negatively affected by vibration, temperature and the magnetic field generated by other devices in the environment or the environment itself.

Incorrect measurements can create false alarms, corrupt the data, and makes the data unreliable for motor diagnostic and machine learning algorithms.

Such sensor has no ability to use the data of other sensors in order to eliminate the ambient interference.

Moreover, depending on the applied measurement method, a low signal-to-noise-ratio can affect disadvantageously the captured measurement results due to a low signal level and a high background noise level.

In prior art statistical methods are currently used for instance in cloud applications to eliminate the noise and correct the distortion.

However, such methods can lead to lose the accuracy of the measurements, which can have undesired negative consequences:
First, the system can create false alarms, for instance when a motor vibration higher than the norm values might be caused by the other machines in the shopfloor.
Second, the system might miss an anomaly due to the suppressing effect of the ambient conditions, for instance very low ambient temperature might suppress the motor's temperature.

Using multiple sensors increase the accuracy of the measurements, however, it introduces a new requirement of time synchronization and device configuration.

It is the objective of the invention to improve the signal quality of sensor data, which are disturbed by environmental noise, in a simple way.

The problem of the invention is solved by a computer-implemented method for improving the signal quality of a first sensor data, wherein the first sensor data is captured by a first sensing means, which is environmentally coupled to a first technical device, and at least one second sensor data is captured by at least one second sensing means, wherein the at least one second sensing means is environmentally decoupled from the first technical device, and a correlation function is calculated by a processor with a memory, which is connected with the first and the at least one second sensing means, using the first and the at least one second sensor data to estimate the background noise, to which background noise the first and the at least one second sensing means are exposed simultaneously, and the correlation function is used to reduce the background noise of the first sensor data, wherein the at least one second sensing means is environmentally coupled to at least one second technical device, characterized in that the at least one second sensing means comprises a first group of sensing means and at least one second group of sensing means, and the at least one second group of sensing means receives respective second group of sensing data, and the estimation of the background noise is based only on the first sensor data and the at least one second group of sensing data.

External sensors can be used in addition to the sensor on the motor to eliminate the noise and correct the distortion generated by the environment.

Overall environmental noise, i.e., background noise, to which the first technical device and the at least one second technical device are exposed simultaneously, can be captured by the first and the at least one second sensing means and further processed to remove background noise.

The overall environmental impact applies to all sensing means simultaneously.

The environmental decoupling between technical devices relates to the coupling caused from one technical device to another technical device directly, i.e., one technical device is the noise transmitter, and one other technical device is the recipient, and decoupled technical devices transfer ideally nothing to the others.

However, background noise is generated by independent noise sources, which are not the technical devices themselves, and all technical devices are exposed to the background noise, but not necessarily in the same extent.

The first technical device and the at least one second technical device are independent and decoupled devices. The respective sensors means capture operational emissions independently, but disturbed by background noise simultaneously as explained before.

With the proposed solution, instead of certain assumptions, background noise induced by environment effects can be measured directly with the help of an additional sensor.

The data measured by motor sensor will be corrected with the data from external sensors.

The effect removal algorithms can be applied easily and effectively on the data in the application by the software compared to the current algorithms applied without any false alarms.

In the context of the present invention, environmentally coupling means an interrelation between two or more sensor parameter data by physical factors, like a mechanical force or momentum, a time dependent behavior like vibration as well as temperature or pressure and similar.

In the context of the present invention, environmentally decoupling means a much lower interrelation between two or more sensor parameters or data by physical factors as between coupled sensor parameters as defined just before.

A decoupling between sensor data can be achieved by a signal ratio between two sensor parameters of at least the factor of 10, preferably by the factor of 100 and more preferably by the factor of 1000 or 10000.

By the environmental coupling between the at least one second device sensing means and the at least one second group technical device, the second sensor means can be used to capture sensor data from the second device as well as to capture background noise data for the further calculation of background noise data related to the first sensor means.

Therefore, a dual use of the second sensor means can be achieved, which improves the system efficiency at all and lowers the system complexity and related costs.

In other words, the at least one second sensing means is environmentally coupled to at least one second technical device and simultaneously environmentally decoupled from the first technical device.

Consequently, the at least one second sensing means is used to capture overall environmental or background noise, to which the first and the at least one second technical device are exposed, independently from each other since mounted on different, environmentally, e.g. mechanically decoupled technical devices.

The invention provides an improved noise reduction by using only the first sensing data and the additional second sensing data to estimate the background noise, and subsequently, to apply a highly efficient background noise reduction algorithm.

In other words, only a subset of the technical devices comprising its respective sensing mean, which delivers respective sensing data.

According to the present features of the claim, the at least one second sensing means comprises a first group of sensing means and at least one second group of sensing means defines a subset of all sensing means and its sensing data.

The first group of sensing means and the at least one second group of sensing means constitute together the at least one second sensing means.

A group of sensing means is a set of sensing means, comprising at least one mean.

The application of said subset allows a simplification of the sensor configuration by using only "sensitive" data, which are high relevant within applying the background noise reduction method and increasing the noise reduction efficiency.

Moreover, the application of said subset allows to reduce network traffic by selecting a group of connected devices.

In a further development of the invention, the at least one second sensing means is mounted stationary apart from the first and the at least one second technical device.

Thus, an isolation of general background noise related to noise produced individually by dedicated devices can be improved. The separation between sensor data of devices and generic noise can be performed in a simpler way, which allows to use cheaper processors with simpler architectures for instance at edge devices.

In a further development of the invention, the environmental coupling is affected by a mechanical factor, in particular vibration, by an environmental factor, in particular temperature or pressure, and/or an electric factor, in particular an electric field or a magnetic field.

A mechanical factor can be for instance vibration, which affects both the first and the at least second sensor means simultaneously.

An environmental factor can be for instance temperature or pressure, which affects both the first and the at least second sensor means simultaneously.

An electrical factor can be for instance a static or a dynamic magnetic or electric field, which affects both the first and the at least second sensor means simultaneously.

Such a factor can be sensed directly or indirectly by a sensor means by a related physical measurand, like the magnitude of a vibration or a temperature or the magnetic field strength.

In a further development of the invention, the at least one noise cancellation subset of the sensor means is defined out of the of the first sensor data and the at least one second sensor means, and the at least one noise cancellation subset is used at estimating the background noise.

Thus, the usage of a subset of sensor data allows to reduce system complexity and enhances efficiency in calculation.

In a further development of the invention, the processor and the technical devices calculate a sensor network topology in between by latencies in the communication, which sensor network topology is considered at the estimation of the background noise by time synchronization of sensor data.

It is clear that the sensor network topology can also include signals from high frequency repeaters for wireless sensor signals, i.e. received, amplified and retransmitted signals.

Thus, considering the sensor network topology enables a simplified calculation of the background noise reduction by including synchronization in a simple way.

The synchronization can be done using methods of the Standard for a Precision Clock Synchronization Protocol for Networked Measurement and Control Systems IEEE 1588-2019, or the Standard for Network Time Protocol (NTP) RFC 958 or the Standard of the Time-Sensitive Networking Task Group of IEEE 802.1, i.e. IEEE 802.1AS.

The problem of the invention is solved by a system for a signal quality improvement of a first sensor data, comprising a first sensor means configured to capture the first sensor data, at least one second sensor means configured to capture at least one second sensor data and a processor with a memory, which is connected with the first and the at least one second sensing means and which is configured to receive the first and the at least one second sensor data, wherein the first sensing means is environmentally coupled to a first technical device, wherein the at least one second sensing means is environmentally decoupled from the first technical device, and the first and the at least one second sensing means are configured in a way, that they are exposed simultaneously to background noise, and the processor is configured to calculate a correlation function using the first and the at least one second sensor data to estimate the background noise, and the system is configured to carry out the method according to at least one of the preceding claims, where the correlation function is used to the reduce background noise related of the first sensor data, wherein the at least one second sensing means is environmentally coupled to at least one second technical device, characterized in that the at least one second sensing means comprises a first group of sensing means and at least one second group of sensing means, and the at least one second group of sensing means receives respective second group of sensing data, and the estimation of the background noise is based only on the first sensor data and the at least one second group of sensing data.

In a further development of the invention, the at least one second sensing means is mounted stationary apart from the first and the at least one second technical device.

This allows an easy determination of the background noise related at the first sensor data by the processor due to a decoupling from impacts by the other, namely the at least one second technical device, which can be often subject of generating own noise, which influences the general background noise negatively.

Such a solution is preferred by simple edge devices providing a simple architecture for the processor.

In a further development of the invention, the at least one second sensing means is environmentally coupled to at least one second technical device.

Thus, it is not necessary to include an additional second sensor and the sensor of a further technical device can be co-used, which reduces the system complexity.

In addition, when considering the at least one second sensing means the background noise, which is influenced also by the at least one second sensing means itself, can be analyzed in a differentiating way, namely the noise of the at least one second sensing means can be distinguished better due to the direct coupling to the at least one second device.

In a further development of the invention, the at least one second sensing means is coupled for direct communication purposes to the first sensing means.

In the context of the present invention direct communication purposes mean for instance a peer-to-peer communication.

The direct communication allows to capture sensor means data, which are for instance inside the wireless coverage of a first and a second sensor means.

Supporting such data transmission, the sensor means are equipped with communication radios providing a two-way communication, implemented for instance by a 5G cellular network, a local Bluetooth network or a local Wi-Fi network or similar.

A single network element, as defined by said radios, can forward sensor data to the processor.

Basically, the processor can be implemented optionally within a device, which itself incorporates a sensing means.

Thus, a mesh sensor network can be obtained and the network for the sensor data transmission from the dedicated sensor means to the processor can be simplified.

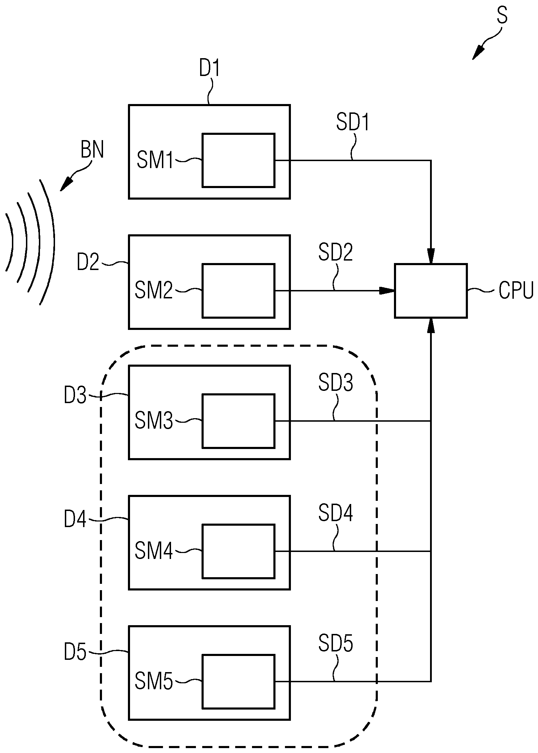

The invention is described in an exemplary embodiment with the attached figure in detail.

The figure shows a system S according to the invention for a signal quality improvement of first sensor data SD1.

The system S comprises a first sensor means SM1, which is configured to capture the first sensor data SD1.

Moreover, the system S comprises additional second sensor means SM2-SM5, which are configured to capture respective second sensor data SD2-SD5.

Further, the system S comprises a processor CPU with a memory, which is connected with the first and the two second sensing means SM1-SM5, and which is configured to receive of the first and the two second sensor data SD1-SD5.

The second sensing means SM2, SM3 optionally can be coupled for direct communication purposes to the first sensing means SM1, for instance by a wireless mesh network.

The first sensing means SM1 is environmentally coupled to a first technical device D1.

The two second sensing means SM2, SM3 are environmentally decoupled from the first technical device D1 respectively.

The first and the two second sensing means SM1-SM3 are configured in a way, that they are exposed simultaneously to a background noise BN.

Additional sensors can be foreseen to measure for instance temperature, magnetic field, vibration, or acoustic signals.

Such sensors can be placed near to the motors D1-D5, no shown in the figure.

The sensing means SM1-SM5 can be realized by a Siemens sensor model SC400, which has built-in wireless and Bluetooth modules to make the communication with external sensors.

Other solutions isolating the motor from external factors are mostly expensive and require often extra equipment.

An additional sensor can be mounted at the wall to improve the wireless range.

The device D1 can be mounted in a proper position to be aware of the environment in a reliable way.

The processor CPU is configured to calculate a correlation function using the first and for instance one or two of the two second sensor data to estimate the background noise BN.

In the figure the dashed line indicates the subset selected from the sensor means and sensor data for said calculation.

The system S is configured to carry out the method according to the invention, where the correlation function is used to the reduce the background noise BN related of the first sensor data SD1.

The second sensing means SM2-SM5 are environmentally coupled to the respective technical devices D2-D5.

The second sensing means SM2 and SM3 can define for instance a subset of all sensing means SM1-SM5 used for an improved elimination or reduction of background sensor noise BN.

The sensing means SM1-SM5 are comprised by the respective technical devices D1-D5.

It is clear, that further not shown parts are necessary for the operation of a stator within an electrical drive, for instance mounting parts, electric connection to a power supply and electronic control components.

For the sake of better understanding these parts are not illustrated and described.

The invention is not restricted to the specific embodiments described in detail herein, but encompasses all variants, combinations and modifications thereof that fall within the framework of the appended claims.

The second sensing means SM2-SM5 are configured to receive respective second group of sensing data SD3-SD5.

The estimation of the background noise BN is based only on the first sensor data SD) and the at least one second group of sensing data SD3-SD5, i.e. a subset of SD1-SD5.

Following method steps can be formulated:
1. Setting a network topology:
   - a user configures a main layout, i.e. a sensor configuration, which are mounted on several technical devices D1-D3, and identifies the processor CPU, wherein the processor CPU can be included within one of the existing sensors, or, in combination or alternatively, a dedicated edge device.
   - The processor CPU transmits information to the subnet members, i.e. the sensors; and in some cases, a time synchronization is required within the subnet, wherein the processor CPU may or may not be involved in this time synchronization, wherein the time synchronization can done using technologies according to the Standards IEEE 1588-2019, RFC 958 or IEEE 802.1AS.
   - To support the configuration process, topology & neighbor discovery and positioning algorithms can be used, e.g. provided by a system based on Bluetooth Low Energy; the processor CPU and the subnet members, i.e. the sensors, around the processor CPU can constitute for instance a star topology proposed to the user, which can be reported as sensor network topology to the processor CPU.
   - Each subnet member receives the information from the processor CPU evaluates the configuration request and sends a response to the processor CPU about the sensor's conformance to the configuration, regarding the technical capabilities of the individual sensor.
   - The processor CPU receives information from the sensors and determines a common configuration according to the responses of the devices and distributes the common configuration to the devices, i.e. the subnet members/sensors.
   - The subnet members receive the common configuration, at least partially, an apply the common configuration and subsequently, the sensors notify the processor CPU whether the operation was/is successful or not.
   - Optionally, the processor CPU creates the final subnet, whose measurements will be used for noise detection, according to the response; in other words, there is at least one noise cancellation subset of all devices used for the noise cancellation; and there can be also more than one noise cancellation group where the processor CPU belongs to.
   - Optionally, the processor CPU creates a comparison group according to response, where again, is at least one comparison subset of all devices used for the comparison; and there can be also more than one comparison group where the processor CPU belongs to.
2. Synchronization the network:
   - After synchronization the processor CPU is notified.
3. Performing the measurement:
   - The processor CPU notifies the sensors to start processing, considering the sensor network topology.
   - The sensors perform the sensing task and preprocess or filter meaningless instantaneous anomalies on incoming data, and subsequently, filtered and refined data are sent to the processor CPU.
      Filtering methods are chosen by the processor CPU at the configuration stage, for instance:
      - Fourier de-noising approach: Fourier analysis converts a signal from its original domain (often time or space) to a representation in the frequency domain and vice versa. After Fourier transforms, the signal and noise are non-correlated and even if the measured signal is noisy, the "non-noise" part of the signal is dominant. Fourier transform finds the real signal frequencies and to obtain a reconstructed signal by using the important frequencies of the signal only. The main aim is to filter the "non relevant frequencies".
      - Exponential smoothing: Exponential smoothing is often used for analysis of time-series data. It smooths data in signal processing, acting as low-pass filters to remove high-frequency noise.
      - Wavelet Transform Based Denoising: Wavelet transform allows signal processing for time-frequency analysis. Wavelet transforms are mathematical tools for analyzing data where features vary over different scales. For signals, features can be frequencies varying over time, transients, or slowly varying trends. Wavelet transforms were primarily created to address limitations of the Fourier transform.
      - PCA (Principal Component Analysis): PCA is an arithmetical procedure that uses the orthogonal property to transform the set of feasibly correlated variables (linked variables) into those variables which are not associated (uncorrelated). PCA aims to remove corrupted data by preservative noise from the signal while preserving the essential features.
      - Low-pass filter: A low-pass filter is a filter that passes signals with a frequency lower than a selected cutoff frequency and attenuates signals with frequencies higher than the cutoff frequency.
      - Wiener filter: The goal of the Wiener filter is to compute a statistical estimate of an unknown signal using a related signal as an input and filtering that known signal to produce the estimate as an output. For example, the known signal might comprises an unknown signal of interest that has been corrupted by additive noise.
4. Detecting anomalies:
   - The processor CPU runs selected algorithms on retrieved data to detect anomalies.

In case a new sensor is required to be added or one of the existing sensors is required to be removed, above steps should be repeated.

For general purpose sensors, the devices can be grouped according to the measured signals to create a sensitive group of sensors for capturing enhanced signals from a dedicated technical device, wherein a sensor can be a member of multiple subnets or groups, where each subnet has different set of measured signals.

### List of reference numerals:

- BN: background noise
- CPU: processing unit
- D1-D5: technical device, e.g. electric motor
- S: system
- SD1-SD5: sensor data
- SM1-SM5: sensing means

## Claims

1. Computer-implemented method for improving the signal quality of a first sensor data (SD1), wherein the first sensor data (SD1) is captured by a first sensing means (SM1), which is environmentally coupled to a first technical device (D1), and at least one second sensor data (SD2-SD5) is captured by at least one second sensing means (SM2-SM5), wherein the at least one second sensing means (SM2-SM5) is environmentally decoupled from the first technical device (D1), and a correlation function is calculated by a processor (CPU) with a memory, which is connected with the first and the at least one second sensing means (SM1-SM5), using the first and the at least one second sensor data (SD1-SD5) to estimate the background noise (BN), to which background noise (BN) the first and the at least one second sensing means (SM1-SM5) are exposed simultaneously, and the correlation function is used to reduce the background noise (BN) of the first sensor data (SD1), wherein the at least one second sensing means (SM2-SM5) is environmentally coupled to at least one second technical device (D2-D5), **characterized in that** the at least one second sensing means (SM2-SM5) comprises a first group of sensing means (SM2) and at least one second group of sensing means (SM3-SM5), and the at least one second group of sensing means (SM3-SM5) receives respective second group of sensing data (SD3-SD5), and the estimation of the background noise (BN) is based only on the first sensor data (SD1) and the at least one second group of sensing data (SD3-SD5).

2. Method according to claim 1, wherein the at least one second sensing means (SM2-SM5) is mounted stationary apart from the first and the at least one second technical device (D1-D5).

3. Method according to at least one of the preceding claims, wherein the environmental coupling is affected by a mechanical factor, in particular vibration, by an environmental factor, in particular temperature or pressure, and/or an electric factor, in particular an electric or a magnetic field.

4. Method according to at least one of the preceding claims, wherein at least one noise cancellation subset of the sensor means is defined out of the of the first sensor data (SD1) and the at least one second sensor means (SM2-SM5), and the at least one noise cancellation subset is used at estimating the background noise (BN).

5. Method according to at least one of the preceding claims, wherein the processor (CPU) and the technical devices (D1-D5) calculate a sensor network topology in between by latencies in the communication, which sensor network topology is considered at the estimation of the background noise (BN) by time synchronization of sensor data (SD1-SD5).

6. System (S) for a signal quality improvement of a first sensor data (SD1), comprising a first sensor means (SM1) configured to capture the first sensor data (SD1), at least one second sensor means (SM2-SM5) configured to capture at least one second sensor data (SD2-SD5) and a processor (CPU) with a memory, which is connected with the first and the at least one second sensing means (SM1-SM5) and which is configured to receive the first and the at least one second sensor data (SD1-SD5), wherein the first sensing means (SM1) is environmentally coupled to a first technical device (D1), wherein the at least one second sensing means (SM2-SM5) is environmentally decoupled from the first technical device (D1), and the first and the at least one second sensing means (SM1-SM5) are configured in a way, that they are exposed simultaneously to background noise (BN), and the processor (CPU) is configured to calculate a correlation function using the first and the at least one second sensor data (SD1-SD3) to estimate the background noise (BN), and the system (S) is configured to carry out the method according to at least one of the preceding claims, where the correlation function is used to the reduce background noise (BN) related of the first sensor data (SD1), wherein the at least one second sensing means (SM2-SM5) is environmentally coupled to at least one second technical device (D2-D5), **characterized in that** the at least one second sensing means (SM2-SM5) comprises a first group of sensing means (SM2) and at least one second group of sensing means (SM3-SM5), and the at least one second group of sensing means (SM3-SM5) receives respective second group of sensing data (SD3-SD5), and the estimation of the background noise (BN) is based only on the first sensor data (SD1) and the at least one second group of sensing data (SD3-SD5).

7. System according to claim 6, wherein the at least one second sensing means (SM2-SM5) is mounted stationary apart from the first and the at least one second technical device (D1-D5).

8. System according to at least one of claims 6 and 7, wherein the at least one second sensing means (SM2-SM5) is coupled for direct communication purposes to the first sensing means (SM1).
